# EUROPEAN PATENT APPLICATION

(11) **EP 4 760 910 A1**
(43) Date of publication of application: **17.06.2026**
(21) Application number: 25816178.5
(22) Date of filing: 18.04.2025
(51) Int. Cl.: H01M 50/207

(54) **BATTERY PACK AND DEVICE INCLUDING SAME**

(30) Priority: 27.05.2024 KR 20240068575
(71) Applicant: LG Energy Solution, Ltd., Seoul 07335 (KR)
(72) Inventor: KIM, Kyungwoo, Daejeon 34122 (KR); YUN, Hyeonki, Daejeon 34122 (KR); JUNG, Seyun, Daejeon 34122 (KR); LEE, Inje, Daejeon 34122 (KR); BAEK, Yunseon, Daejeon 34122 (KR); PARK, Jonghee, Daejeon 34122 (KR)
(74) Representative: Plasseraud IP
(86) International application number: PCT/KR2025/005296
(87) International publication number: WO 2025/249764

(57) **Abstract**

A battery pack according to an embodiment of the present disclosure comprises: a battery module including a battery cell stack in which a plurality of battery cells including electrode leads are stacked, and a module frame in which the battery cell stack is housed; a pack frame which houses the module frame in a state that the battery cell stack is housed, and has an opened upper part; a pack cover covering the opened upper part of the pack frame; and a cross member that sets the position of the module frame in a state that the battery cell stack is housed. At least one flange for coupling with the cross member is provided on a side surface of the module frame.

## Description

### [TECHNICAL FIELD]

### Cross-Reference to Related Application(s)

This application claims priority to and the benefit of Korean Patent Application no. KR10-2024-0068575, filed on May 27, 2024, in the Korean Intellectual Property Office, the entire contents of which are incorporated herein by reference.

The present disclosure relates to a battery pack and a device including the same, and more particularly, to a battery pack having enhanced space utilization rate, and a device including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator interposed between them, and a battery case which seal and houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminated sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

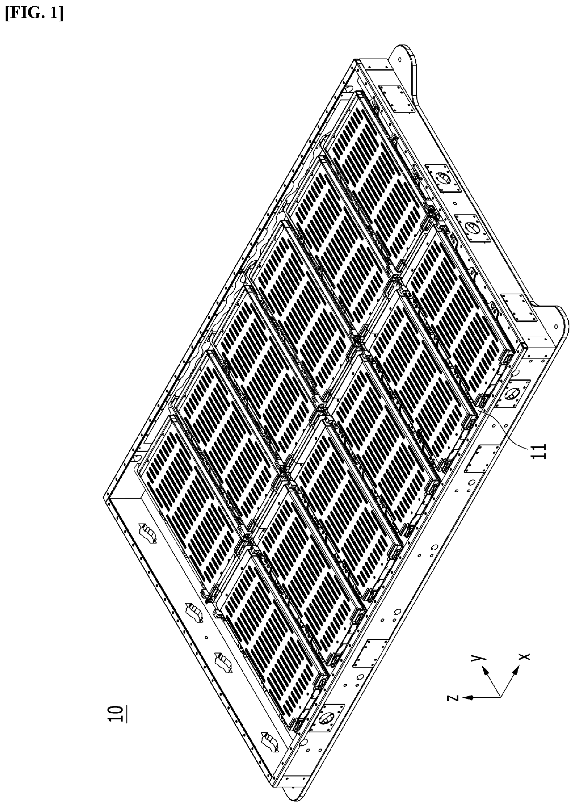

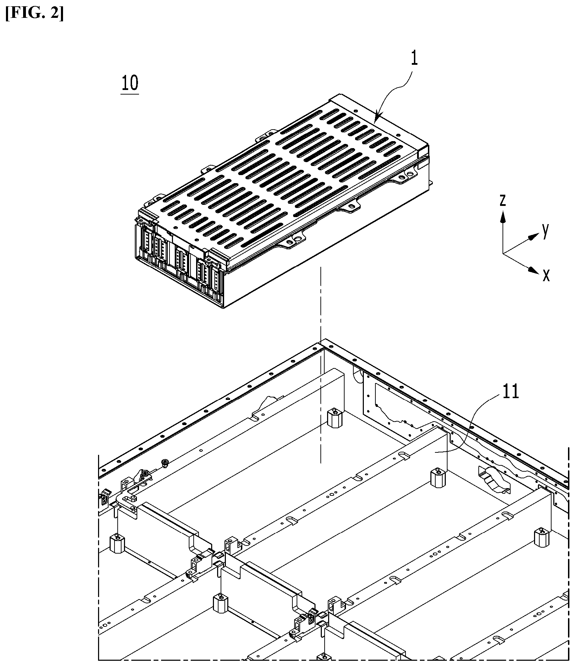

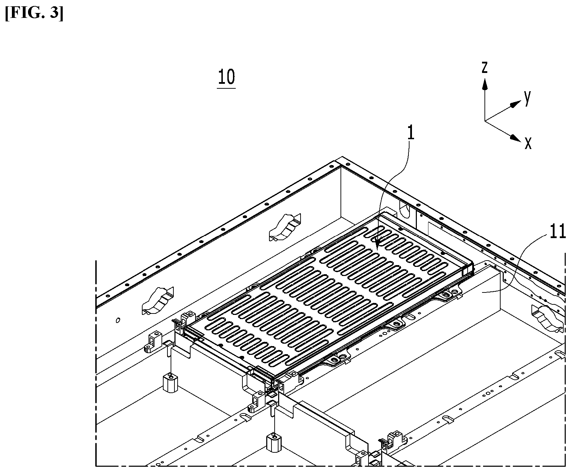

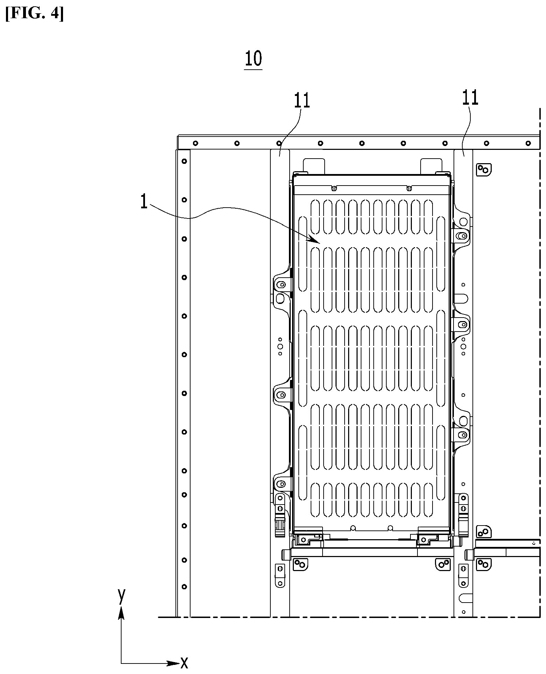

FIG. 1 is a perspective view showing a conventional battery pack 10. FIG. 2 is an exploded perspective view of a conventional battery module 1 and battery pack 10. FIG. 3 is a partial perspective view showing a conventional battery module 1 and battery pack 10. FIG. 4 is a plan view of a conventional battery module 1 and battery pack 10.

A conventional battery pack 10 may include a cross beam 11 that sets the position of the battery module 1. Separation of the battery module 1 mounted on the battery pack 10 can be prevented through the cross beam 11.

However, the space utilization rate of the battery pack 10 is reduced due to the space occupied by the cross beam 11 inside the battery pack 10. This causes reduction in the energy density of the battery pack 10. In addition, the mass of the battery pack 10 is increased due to the introduction of the cross beam 11.

### [DETAILED DESCRIPTION OF THE INVENTION]

### [Technical Problem]

An object of the present disclosure is to increase the space utilization rate of a battery pack and reduce the mass and unit cost. Specifically, an object of the present disclosure is to provide a battery pack which can increase the space utilization rate of the battery pack and reduce the mass and unit cost by introducing a cross member which substitutes for an existing cross beam, and a device including the same.

However, the technical objects to be solved by embodiments of the present disclosure are not limited to the above-described objects, and can be variously expanded within the scope of the technical idea included in the present disclosure.

### [Technical Solution]

A battery pack according to an aspect of the present disclosure comprises: a battery module including a battery cell stack in which a plurality of battery cells including electrode leads are stacked, and a module frame in which the battery cell stack is housed; a pack frame which houses the module frame in a state that the battery cell stack is housed, and has an opened upper part; a pack cover covering the opened upper part of the pack frame; and a cross member that sets the position of the module frame in a state that the battery cell stack is housed. At least one flange for coupling with the cross member is provided on a side surface of the module frame.

The flange may comprise a fastening hole that couples with the cross member.

The cross member may be a belt-shaped member.

The cross member may comprise a coupling part that couples with the flange.

The cross member and the flange may be coupled by a hook.

The cross member may be parallel to the direction in which the electrode lead protrudes.

The pack frame may comprise a bottom frame on which the module frame is placed in a state that the battery cell stack is housed; and a side frame disposed along a circumference of the bottom frame. The cross member may have a seating part that is coupled to the upper end of the side frame.

The seating part may be coupled with the pack frame by a bolt.

The cross member may be coupled with the pack cover.

The cross member may comprise a screw that couples with the pack cover.

According to another aspect of the present disclosure, there is provided a device comprising the above-mentioned battery pack.

### [Advantageous Effects]

According to specific embodiments of the present disclosure, it is possible to increase the space utilization rate of a battery pack by introducing a cross member which substitutes for an existing cross beam, and a module frame which couples with the cross member. This makes it possible to reduce the mass and unit cost of the battery pack.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a conventional battery pack.
FIG. 2 is an exploded perspective view of a conventional battery module and battery pack.
FIG. 3 is a partial perspective view showing a conventional battery module and battery pack.
FIG. 4 is a plan view of a conventional battery module and battery pack.
FIG. 5 is a partial perspective view showing a battery pack according to an embodiment of the present disclosure.
FIG. 6 is an exploded perspective view showing a battery module according to an embodiment of the present disclosure.
FIG. 7 is a partially exploded perspective view of a battery module and a battery pack according to an embodiment of the present disclosure.
FIG. 8 is a partial perspective view of a battery pack according to an embodiment of the present disclosure.
FIG. 9 is an exploded perspective view of a battery pack according to an embodiment of the present disclosure.
FIG. 10 is a perspective view showing a module frame according to an embodiment of the present disclosure.
FIG. 11 is a perspective view showing a cross member according to an embodiment of the present disclosure.
FIG. 12 is a partially enlarged diagram of a section "A" of FIG. 11.
FIG. 13 is a partial perspective view showing a cross member and a module frame according to an embodiment of the present disclosure.
FIG. 14 is an exploded perspective view showing a side frame and a cross member according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

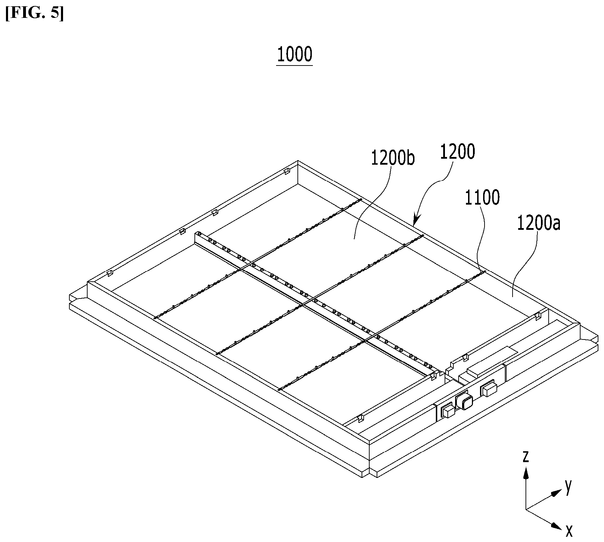

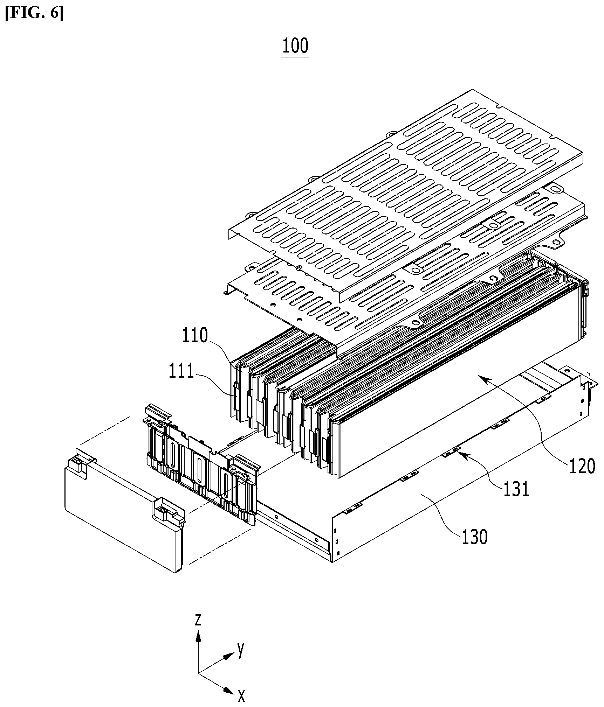

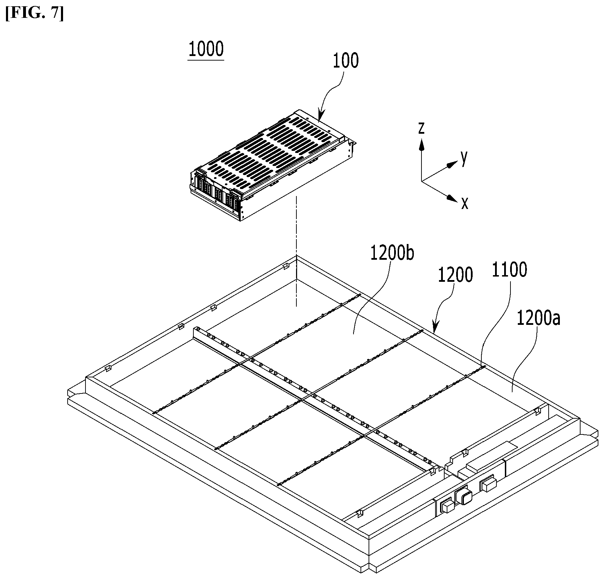

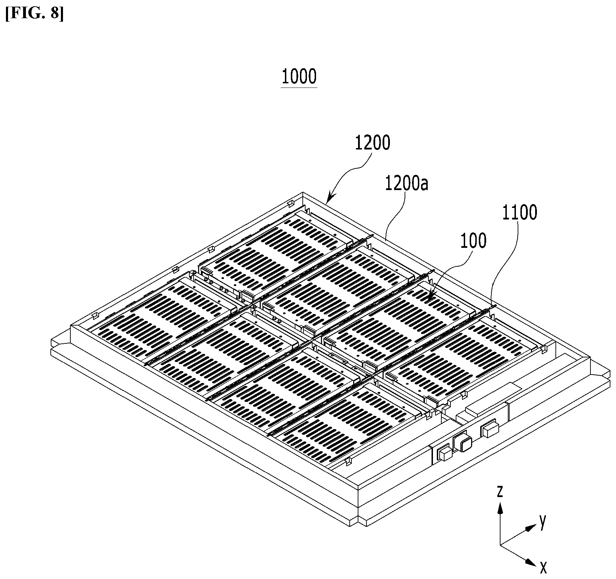

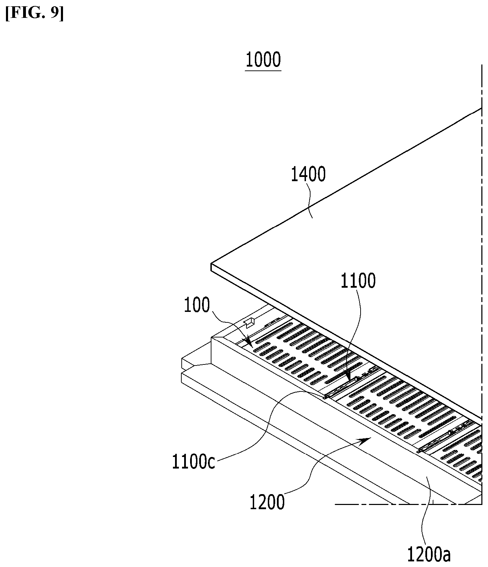

FIG. 5 is a partial perspective view showing a battery pack 1000 according to an embodiment of the present disclosure. Specifically, FIG. 5 shows a battery pack 1000 in which the battery module 100 and the pack cover 1400 are removed. FIG. 6 is an exploded perspective view showing a battery module 100 according to an embodiment of the present disclosure. FIG. 7 is a partially exploded perspective view of a battery module 100 and a battery pack 1000 according to an embodiment of the present disclosure. FIG. 8 is a partial perspective view of a battery pack 1000 according to an embodiment of the present disclosure. Specifically, FIG. 8 shows a battery pack 1000 in which the pack cover 1400 is removed. FIG. 9 is an exploded perspective view of a battery pack 1000 according to an embodiment of the present disclosure. FIG. 9 shows a battery pack 1000 in which a pack cover 1400 is contained.

Referring to FIGS. 5 to 9, a battery pack 1000 according to an embodiment of the present disclosure comprises a battery module 100 including a battery cell stack 120 in which a plurality of battery cells 110 including electrode leads 111 are stacked, and a module frame 130 in which the battery cell stack 120 is housed; a pack frame 1200 which houses the module frame 130 in a state that the battery cell stack 120 is housed, and has an opened upper part; a pack cover 1400 covering the opened upper part of the pack frame 1200; and a cross member 1100 that sets the position of the module frame 130 in a state that the battery cell stack 120 is housed.

The battery module 100 according to the present embodiment includes a plurality of battery cells 110. The battery cells 110 according to the present embodiment may be various types of battery cells, for example, a pouch type battery cell, a prismatic battery cell, or a cylindrical battery cell. As an example, as shown in FIG. 6, the battery cell according to the present embodiment may be a pouch type battery cell 110. The following describes a pouch type battery cell 110, but the battery cell according to the present embodiment is not limited thereto, and various types of battery cells can be applied.

The battery cells 110 in the battery module 100 may be configured in plural numbers. As an example, a plurality of battery cells 110 may be stacked along one direction so as to be electrically connected to each other, thereby forming a battery cell stack 120. As an example, a plurality of battery cells 110 may be stacked along a direction parallel to the X-axis of FIG. 6 while standing upright. The battery cells 110 may be stacked from any one side surface part to the other side surface part of the module frame 130, in a state that one surface of the battery cells 110 is parallel to the side surface parts of the module frame 130. Thereby, the electrode leads 111 may protrude in a direction perpendicular to the direction in which the battery cells 110 are stacked. In the battery cell 110, one electrode lead 111 may protrude in the +y-axis direction, and the other electrode lead 111 may protrude in the -y-axis direction. If the electrode leads 111 are battery cells protruding only in one direction, the electrode leads 111 may protrude in the y-axis direction or the -y-axis direction of FIG. 6.

The module frame 130 according to the present embodiment may be intended to protect the battery cell stack 120 and the electrical components connected thereto from external physical impact. The module frame 130 may house the battery cell stack 120 and the electrical components connected thereto in an internal space of the module frame 130.

The structure of the module frame 130 may have various shapes. According to the present embodiment, the structure of the module frame 130 may be a mono frame structure. Here, the mono frame may be in the form of a metal plate in which the upper surface, the lower surface and both side surfaces are integrated. The mono frame may be manufactured by extrusion molding.

However, the structure of the module frame 130 is not limited thereto. As another example, the module frame 130 may have a structure in which a U-shaped frame and an upper plate are coupled to each other. In this case, the U-shaped frame may be formed by coupling or integrating the lower surface and both side surfaces of the module frame 130. In this case, each frame or plate constituting the U-shaped frame may be manufactured by press molding. In addition, the structure of the module frame 130 may be provided as an L-shaped frame in addition to a mono frame or a U-shaped frame, and may also be provided as various structures not described in the above-described embodiments.

The module frame 130 may be provided in a form in which the front and rear surfaces are opened along the longitudinal direction (y-axis direction of FIG. 6). Here, the longitudinal direction may be the direction in which the electrode leads 111 protrude from the battery cells 110. The longitudinal direction may also be a direction perpendicular to the width direction of the battery cell stack 120 described above. That is, the longitudinal direction may be a direction parallel to the y-axis of FIG. 6, and the width direction may be a direction parallel to the x-axis of FIG. 6.

The pack frame 1200 according to the present embodiment may be intended to protect the battery module 100 and the electrical components connected thereto from external physical impact. As will be described later, the pack frame 1200 may include a bottom frame 1200b on which a module frame 130 is placed in a state that a battery cell stack 120 is housed, and a side frame 1200a disposed along a circumference of the bottom frame 1200b. After the battery modules 100 are disposed in the internal space of the bottom frame 1200b, the pack cover 1400 is coupled with the edge of the side frame 1200a, thereby sealing the pack frame 1200.

The pack frame 1200 may include a portion with high thermal conductivity to quickly release heat generated in the internal space to the outside. For example, at least a part of the pack frame 1200 may be manufactured from a metal with high thermal conductivity, and examples thereof include aluminum, gold, silver, copper, platinum, or alloys containing these metals. Further, the pack frame 1200 may have partially electrical insulation properties, and an insulating film may be provided or an insulating coating may be applied to a location where insulation is required. A portion to which an insulating film or an insulating coating is applied in the pack frame 1200 may be referred to as an insulating part.

A battery module 100 may be mounted at the position set by a cross member 1100 according to the present embodiment. For example, as shown in FIG. 8, the battery modules 100 may be arranged in two rows inside the pack frame 1200, and the cross member 1100 may be disposed across the central part of the pack frame 1200 so as to separate the battery modules 100 arranged in two rows. One side surface of the module frame 130 may be located corresponding to one side surface of the cross member 1100, and a side surface on the opposite side of the module frame 130 may be located on the side surface on the opposite side of the cross member 1100. However, this is an example of the internal structure of the battery pack 1000, and the structure of the battery pack 1000 of the present embodiment is not limited to the above-described examples.

As will be described later, the coupling between the cross member 1100 and the module frame 130 may prevent the battery module 100 from being separated from the battery pack 1000. Movement of the battery module 100 in the front/back and left/right directions (the +x-axis, -x-axis, +y-axis, and -y-axis directions in FIG. 8) is minimized through the coupling between the cross member 1100 and the module frame 130, which makes it possible to prevent damage to the battery module 100 due to external vibration and impact.

As shown in FIGS. 1 to 4, the existing cross beam 11 (see FIG. 3) occupies the space between the battery modules 1. The space between the battery modules 100 can be minimized by applying the cross member 1100 according to the present embodiment instead of the existing cross beam 11 (see FIG. 3). Specifically, for the coupling the existing cross beam 11 (see FIG. 3) and the battery module 1, the existing cross beam is required to have a width of a certain level or more along the direction in which the battery cells are stacked (the x-axis direction of FIG. 4). However, as will be described later, it may be sufficient for the cross member 1100 according to the present embodiment to have a width smaller than the width required for the existing cross beam 1 in the coupling with the battery module 100. Further, as shown in FIGS. 5, 7 and 8, in the battery pack 1000 to which the cross member 1100 according to the present embodiment is applied, a space is generated between the cross member 1100 and the bottom frame 1200b unlike the battery pack 10 to which the existing cross beam 11 (see FIG. 3) is applied, so that the space utilization rate can be increased compared to the existing battery pack 10 (see FIG. 3).

For example, the energy density can be increased by adding a battery cell 110 to the space occupied by the existing cross beam 11 (see FIG. 3). As another example, the cooling performance can be increased by adding a cooling member to the space occupied by the existing cross beam 11 (see FIG. 3). As another example, a swelling phenomenon of the battery module 100 can be controlled by adding an insulating pad to the space occupied by the existing cross beam 11 (see FIG. 3).

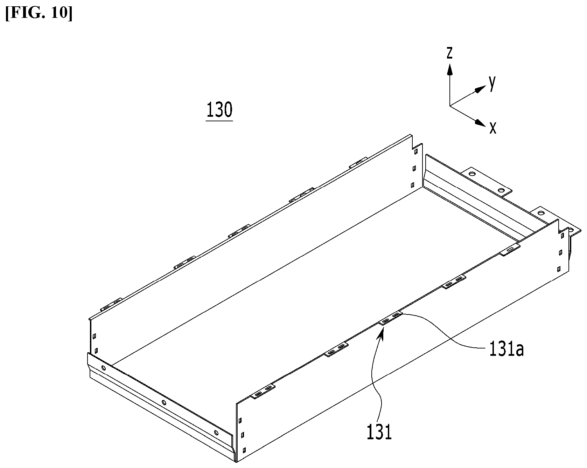

FIG. 10 is a perspective view showing a module frame 130 according to an embodiment of the present disclosure.

Referring to FIG. 10, at least one flange 131 for coupling with a cross member 1100 is provided on the side surface of the module frame 130 according to an embodiment of the present disclosure.

The flange 131 may be extended and protruded in a direction perpendicular to the direction in which the cross member 1100 extends (in the x-axis direction of FIG. 10). That is, the flange 131 may be protruded outward (in the +x-axis direction or the -x-axis direction of FIG. 10) from one side surface of the module frame 130. Specifically, some flanges 131 may be protruded in the +x-axis direction from one side surface located in the +x-axis direction of the module frame 130, and the other flange 131 may be protruded in the -x-axis direction from the other side surface located in the -x-axis direction in the module frame 130. The number of flanges 131 may be plural, and the number thereof may be determined by the coupling force between the flanges 131 and the cross member 1100, and the like.

A flange 131 is provided on the side surface of the module frame 130, and the battery module 100 and the cross member 1100 are coupled through the flange 131, so that the space utilization rate inside the battery pack 1000 can be increased.

Next, referring to FIG. 10, the flange 131 according to an embodiment of the present disclosure may include a fastening hole 131a that couples with the cross member 1100.

It is possible to prevent separation of the battery module 100 through the coupling between the flange 131 and the cross member 1100. In other words, the movement of the battery module 100 in the front/back and left/right directions (the +x-axis, -x-axis, +y-axis, and -y-axis directions in FIG. 8) is minimized through the coupling between the flange 131 and the cross member 1100, which makes it possible to prevent damage to the battery module 100 due to external vibration and impact.

The coupling between the flange 131 and the cross member 1100 may be a hook coupling, which will be described later, or may be a force-fitting coupling, a bolt coupling, or a rivet coupling in addition to the hook coupling. The coupling method between the flange 131 and the cross member 1100 may be determined by the rigidity of the battery pack 1000 required from situations such as external vibration or impact.

In FIG. 10, the flange 131 is shown as including two fastening holes 131a, but the shape, size, and number of the fastening holes 131a may be determined depending on the coupling method between the flange 131 and the cross member 1100.

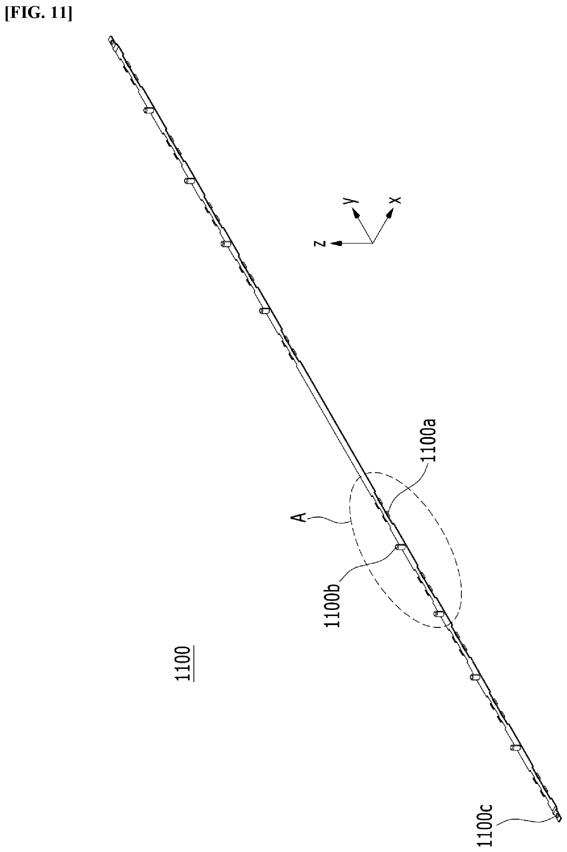

FIG. 11 is a perspective view showing a cross member 1100 according to an embodiment of the present disclosure.

Referring to FIG. 11, the cross member 1100 according to an embodiment of the present disclosure may be a belt-shaped member.

The cross member 1100 may be formed as a belt-shaped member having linear shape or a belt-shaped member having curved surface. The thickness, material, length, and width of the cross member 1100 may be designed based on the dimensions of the battery pack 1000 and the battery module 100, the required rigidity, and the like.

Since the cross member 1100 is formed as a belt-shaped member, the mass of the battery pack 1000 may be reduced compared to a battery pack 1000 to which an existing cross beam 11 (see FIG. 3) is applied. In addition, the unit price of the battery pack 1000 may be reduced.

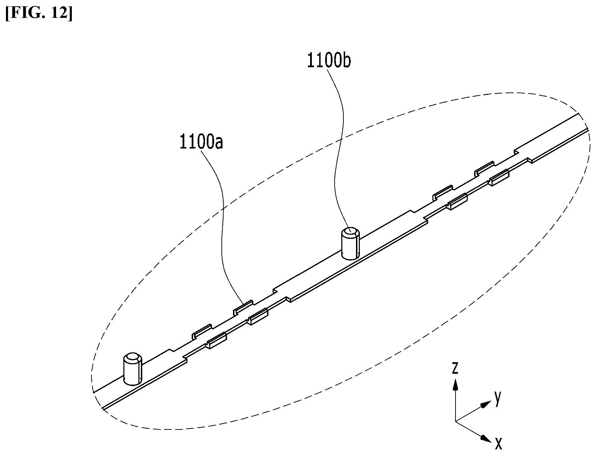

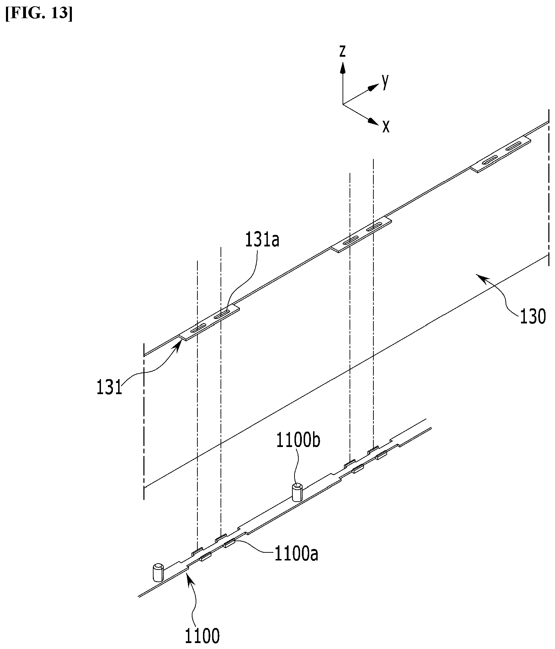

FIG. 12 is a partially enlarged diagram of a section "A" of FIG. 11. FIG. 13 is a partial perspective view showing a cross member 1100 and a module frame 130 according to an embodiment of the present disclosure. Specifically, FIG. 13 is a partial perspective view showing the coupling relation between the cross member 1100 and the module frame 130.

Referring to FIGS. 11 to 13, a cross member 1100 according to an embodiment of the present disclosure may include a coupling part 1100a that couples with a flange 131.

In FIG. 11, the coupling part 1100a is shown as having a shape that protrudes in the +z-axis direction of FIG. 11, but the shape of the coupling part 1100a may be determined by the coupling method of the cross member 1100 and the flange 131. The coupling between the flange 131 and the cross member 1100 may be a hook connection, which will be described later, or may be a force-fitting coupling, a bolt coupling, or a rivet coupling as described above. If a hook coupling method is adopted, the coupling part 1100a may have a hook shape. If a force-fitting coupling method is adopted, the coupling part 1100a may have a shape suitable for forcibly fitting and coupling with the fastening hole 131a of the flange 131. For example, the coupling part 1100a may have a protruding shape that is forcibly fitted and coupled with the fastening hole 131a. If a bolt coupling method is adopted, the coupling part 1100a may be a hole through which a bolt passes. For example, the flange 131 and the cross member 1100 may be coupled in such a manner that the bolt passes through the hole and the fastening hole 131a and fastens with the nut. The coupling method between the flange 131 and the cross member 1100 may be determined by the rigidity of the battery pack 1000 required from situations such as external vibration or impact.

The cross member 1100 and the flange 131 can be coupled by a hook. Although not shown in the figures, the coupling part 1100a of the cross member 1100 may have a hook structure, wherein the hook structure can be detachably coupled to the flange 131. By the hook structure, the cross member 1100 can be fixed to a fixed position of the flange 131, and can be easily assembled and disassembled in a one-touch manner.

Referring again to FIGS. 6 to 8, the cross member 1100 according to an embodiment of the present disclosure may be parallel to the direction in which the electrode lead 111 protrudes.

As described above, the battery cells 110 in the battery module 100 are stacked along one direction, and the cross member 1100 may be located on one side surface of the stacking direction of the battery cells 110 with respect to the battery module 100. The cross member 1100 may be in a form that extends along a direction perpendicular to the stacking direction of the battery cells 110. More specifically, as shown in FIGS. 7 and 8, the battery cells 110 may be stacked within the battery module 100 along a direction parallel to the x-axis of FIG. 6, in a state of being perpendicular to one surface of the bottom frame 1200b of the pack frame 1200. The cross member 1100 is located on one side surface of the x-axis direction of FIG. 8 with respect to one battery module 100. The cross member 1100 may also be in a form that extends along a direction parallel to the y-axis of FIG. 8.

The cross member 1100 is disposed parallel to the direction in which the electrode lead 111 protrudes (the y-axis direction of FIG. 6), which makes it possible to minimize the coupling force between the flange 131 and the cross member 1100. This makes it possible to prevent the battery module 100 from being separated. Thereby, the movement of the battery module 100 in the front/back and left/right directions (the +x-axis, -x-axis, +y-axis, and -y-axis directions in FIG. 8) is minimized through the coupling between the flange 131 and the cross member 1100, which makes it possible to prevent damage to the battery module 100 due to external vibration and impact.

Further, the cross member 1100 may be disposed parallel to the direction in which the electrode lead 111 protrudes (y-axis direction of FIG. 6), which makes it possible to increase the space utilization rate within the battery pack 1000 and increase the energy density.

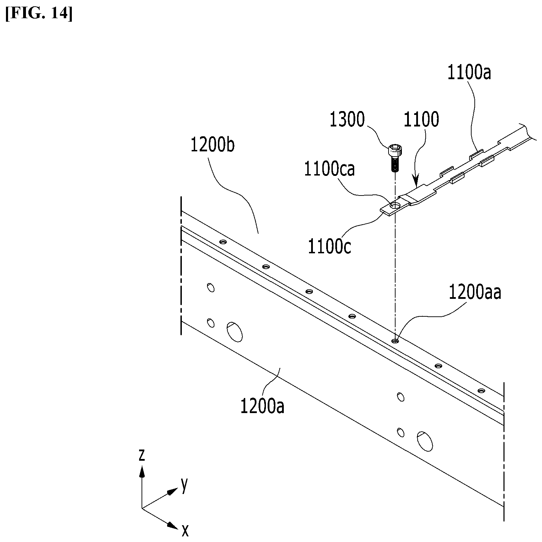

FIG. 14 is an exploded perspective view showing a side frame 1200a and a cross member 1100 according to an embodiment of the present disclosure. Specifically, FIG. 14 is an exploded perspective view showing the coupling relation between the side frame 1200a and the cross member 1100.

Referring to FIGS. 7, 8, 11 and 14, a pack frame 1200 according to an embodiment of the present disclosure may include a bottom frame 1200b on which a module frame 130 is placed in a state that a battery cell stack 120 is housed; and a side frame 1200a disposed along a circumstance of the bottom frame 1200b. The cross member 1100 may have a seating part 1100c that couples with an upper end of the side frame 1200a.

The side frame 1200a may extend in a direction perpendicular to one surface of the bottom frame 1200b. An internal space having an opened upper part is provided by the bottom frame 1200b and the side frame 1200a, and at least one battery module 100 may be housed in such internal space.

As will be described later, through the coupling between the fixing part 1100c and the pack frame 1200, the mechanical rigidity of the battery pack 1000 may be secured in situations such as external vibration or impact of the battery pack 1000.

Referring again to FIG. 14, the fixing part 1100c according to an embodiment of the present disclosure may be coupled with the pack frame 1200 by a bolt.

The seating part 1100c may include a through hole 1100ca made to pass through in the z-axis direction of FIG. 14. Further, the pack frame 1200 may include a pack frame fastening hole 1200aa at a position corresponding to the through hole 1100ca. In a state that the through hole 1100ca and the pack frame fastening hole 1200aa are aligned, the cross member 1100 may be fixed to the pack frame 1200 by fastening a bolt 1300 passing through them. For example, a screw thread may be formed on the inner wall of the pack frame fastening hole 1200aa, and the bolt 1300 may be coupled directly to the pack frame fastening hole 1200aa.

Through the coupling between the cross member 1100 and the pack frame 1200, the mechanical rigidity of the battery pack 1000 can be secured in situations such as external vibration or impact of the battery pack 1000. Further, the movement of the battery module 100 in the front/back and left/right directions (the +x-axis, -x-axis, +y-axis, and -y-axis directions in FIG. 8) is minimized, which makes it possible to prevent damage to the battery module 100 due to external vibration and impact.

Referring again to FIG. 9, the cross member 1100 according to an embodiment of the present disclosure may be coupled with the pack cover 1400. For example, the cross member 1100 may include a protruding shape (not shown) that couples with the pack cover, and the pack cover 1400 may include an insertion part (not shown) into which the protruding shape may be inserted at a position corresponding to the protruding shape. The protruding shape is inserted into the insertion part, so that the cross member 1100 may be coupled with the pack cover 1400.

Further, as another example, a separate nut member (not shown) may be provided on the cross member 1100. The pack cover 1400 may include a hole (not shown) of the pack cover 1400 at a position corresponding to the nut member. In a state that the nut member and the hole of the pack cover 1400 are aligned, the cross member 1100 can be coupled with the pack cover 1400 by fastening a bolt (not shown) passing through them.

Through the coupling between the cross member 1100 and the pack cover 1400, the mechanical rigidity of the battery pack 1000 can be secured in situations such as external vibration or impact of the battery pack 1000. Further, the movement of the battery module 100 in the front/back and left/right directions (the +x-axis, -x-axis, +y-axis, and -y-axis directions in FIG. 8) is minimized, which makes it possible to prevent damage to the battery module 100 due to external vibration and impact.

Referring again to FIGS. 9 and 12, the other cross member 1100 according to an embodiment of the present disclosure may include a screw 1100b that couples with the pack cover 1400. The screw 1100b may protrude in the +z-axis direction of FIG. 9, i.e., toward the pack cover 1400, as shown in FIG. 9. The pack cover 1400 may include a hole (not shown) at a position corresponding to the screw 1100b. After the screw 1100b passes through the hole, the cross member 1100 and the pack cover 1400 may be coupled by a method of fastening a nut to the screw 1100b. For effective fixation, the screw 1100b applied to each cross member 1100 is preferably configured in plural numbers.

Through such coupling, the mechanical rigidity of the battery pack 1000 can be secured in situations such as external vibration or impact of the battery pack 1000. Further, the movement of the battery module 100 in the front/back and left/right directions (the +x-axis, -x-axis, +y-axis, and -y-axis directions in FIG. 8) is minimized, which makes it possible to prevent damage to the battery module 100 due to external vibration and impact.

According to another aspect of the present disclosure, a device comprising a battery pack 1000 is provided. The battery pack 1000 may be applied to various devices. Specifically, it can be applied to transportation vehicles such as an electric bike, an electric vehicle, and a hybrid electric vehicle, or an ESS (Energy Storage System) and may be applied to various devices capable of using secondary batteries, without being limited thereto.

The terms representing directions such as the front side, the rear side, the left side, the right side, the upper side, and the lower side have been used in the present embodiment, but the terms used are provided simply for convenience of description and may become different according to the position of an object, the position of an observer, or the like.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: Battery module
110: Battery cell
111: Electrode lead
120: Battery cell stack
130: Module frame
131: Flange
1000: Battery pack
1100: Cross member
1100a: Coupling part
1100b: Screw
1100c: Seating part
1200: Pack frame
1200a: Side frame
1200b: Bottom frame
1300: Bolt
1400: Pack cover

## Claims

1. A battery pack comprising:
a battery module including a battery cell stack in which a plurality of battery cells including electrode leads are stacked, and a module frame in which the battery cell stack is housed;
a pack frame which houses the module frame in a state that the battery cell stack is housed, and has an opened upper part;
a pack cover covering the opened upper part of the pack frame; and
a cross member that sets the position of the module frame in a state that the battery cell stack is housed,
wherein at least one flange for coupling with the cross member is provided on a side surface of the module frame.

2. The battery pack according to claim 1,
wherein the flange comprises a fastening hole that couples with the cross member.

3. The battery pack according to claim 1,
wherein the cross member is a belt-shaped member.

4. The battery pack according to claim 1,
wherein the cross member comprises a coupling part that couples with the flange.

5. The battery pack according to claim 1,
wherein the cross member and the flange are coupled by a hook.

6. The battery pack according to claim 1,
wherein the cross member is parallel to the direction in which the electrode lead protrudes.

7. The battery pack according to claim 1,
wherein the pack frame comprises a bottom frame on which the module frame is placed in a state that the battery cell stack is housed; and a side frame disposed along a circumference of the bottom frame,
the cross member has a seating part that is coupled to the upper end of the side frame.

8. The battery pack according to claim 7,
wherein the seating part is coupled with the pack frame by a bolt.

9. The battery pack according to claim 1
wherein the cross member is coupled with the pack cover.

10. The battery pack according to claim 1
wherein the cross member comprises a screw that couples with the pack cover.

11. A device comprising the battery pack according to claim 1
